# EUROPEAN PATENT SPECIFICATION

(11) **EP 1 136 287 B1**
(45) Date of publication and mention of the grant of the patent: **12.01.2005**
(21) Application number: 01106376.5
(22) Date of filing: 19.03.2001
(51) Int. Cl.: B60C 25/02

(54) **Self-powered bead lifting lever**
Selbstangetriebener Reifenwulstkern- Hebel
Levier automoteur de levage du talon

(30) Priority: 21.03.2000 IT VR000027
(43) Date of publication of application: 26.09.2001
(73) Proprietor: BUTLER ENGINEERING & MARKETING S.r.l., 42010 Rio Saliceto (Reggio Emilia) (IT)
(72) Inventor: Gonzaga, Tullio, 42015 Correggio (Reggio Emilia) (IT)
(74) Representative: Reniero, Cirillo Silvano

(56) References cited:
- CA-A- 1 018 054
- FR-A- 2 574 346
- GB-A- 2 336 139
- US-A- 4 995 439
- US-A- 5 265 661
- US-A- 5 806 578

## Description

The present invention relates to a self-powered bead lifting lever. Bead lifting levers are already available on the market and are usually constituted by one rod-like body having tapered and slightly upturned ends in order to reach and engage more easily tyre beads, in particular the inner bead, thus making handier and quicker the mounting of the bead on, or the removal from a rim.

Levers used at present, although being satisfactory from many points of view, have none the less some heavy drawbacks.

A first drawback is the fact that since levers are constituted by one rod-like body, an operator, when dealing with e.g. removing a pneumatic from a rim, after reaching the inner bead of the tyre with a suitably flattened and upturned end while passing under the external bead at the tool of a tyre mounting-dismounting machine, must exert a major physical effort to deform the inner bead in order to free it from the external flange of the rim.

A second drawback of conventional bead lifting levers is the fact that the above described operation of removing the inner bead of a tyre from a rim usually implies substantial deformation of the bead itself to such an extent as often to compromise its integrity and continuity and, in case of tubeless tyres, even airtightness of the tyre.

A further drawback is faced with light alloy rims that have a quite soft surface against which high pressures might cause substantial damages.

GB-A-2 336 139 shows a bead lifting lever according to the preamble of claim 1. It further discloses a device for "breaking" or releasing the bead of a pneumatic tyre mounted on a wheel hub. Such device comprises an hydraulic operated ram arranged to control a tyre liver and to co-operate with a mounting plate.
The tyre lever is designed to be pushed against the bead of a pneumatic tyre in order to move it inwardly into the wheel rim, the reaction on the ram being applied to the mounting plate fixed to a wheel hub.

FR-A-2 574 346 relates to a non-extendable bead breaking lever having a hook-like end arranged to engage with a rim on one side of a wheel rim and a pressing member that is articulated to an intermediate portion of the lever at a distance from the hook-like end, and designed to engage a bead on the other side of the wheel rim for mounting it on the wheel rim.

CA-A-1 018 054 is concerned with a replaceable tool bead assembled in a handle and provided with extra striking weight to increase the driving force of the handle onto the tool.

US-A-5 265 661 discloses a tyre removal tool which cannot be lengthened and shortened and comprises a handle at one end and a fork-like tool head at the other end. The fork like tool has two hook-shaped ends arranged to remove a released bead from a wheel rim. The operator must use both a hand and a foot to operate such a tool.

The main object of the present invention is to provide a lever for mounting a tyre on, or removing it from a rim, which suitable for eliminating or substantially reducing the above mentioned drawbacks with reference to conventional bead lifting levers.

Another object of the present invention is that by using the said bead lifting lever it is possible to carry out removal of both the inner and the outer tyre beads without requiring a major effort by the operator and, above all, affecting the tyre features.

Not last object of the present invention is that by means of the said bead lifting lever it is possible, to mount in a quite easy and practical way a rubber ring of PAX-type by Michelin on, or to remove it from, a tyre without irreversibly deforming the tyre.

These and other objects that will be better appear hereinbelow are attained by a bead lifting lever according to claim 1.

Further aspects and advantages of the present invention will be better appear in the following detailed description of some presently preferred embodiments thereof, given by way of illustrating and not limiting examples, with reference to the accompanying drawings, in which:
FIGURE 1 shows a side elevation view of a bead lifting lever according to the invention having its engaging portion in its position of maximum extraction from its helve portion;
FIGURE 2 shows a longitudinal section view on an enlarged scale of the bead lifting lever of Figure 1 with its engaging portion in its maximum insertion position inside the helve portion;
FIGURE 3 is a cross-section view on an enlarged scale of the rear portion of the bead lifting lever of Figure 1, where a compressed air feed system is shown in its loading stage position;
FIGURE 4 shows a cross-section view of the feed system of Figure 3 in its ejecting stage;
FIGURE 5 illustrates a partial diametral section view of a rim with a bead lifting lever according to the invention in its starting tyre removing position;
FIGURE 6 is a partial diametral section of the rim in Figure 5 with lever, the find being in its final disassemble position;
FIGURE 7 shows a longitudinal section of another embodiment of the bead lifting lever according to the invention having its engaging portion in its maximum extraction position from the helve portion;
FIGURE 8 shows a longitudinal section of the bead lifting lever of Figure 7 with its engaging portion in its maximum insertion position inside the helve portion;
FIGURE 9 is a diametral section view of a tyre with the bead lifting lever of Figure 7 in its starting position while removing a rubber ring inside the tyre;
FIGURE 10 shows a view of the tyre of Figure 9 with the bead lifting lever in its final extracting position and the ring substantially removed from the tyre; and
FIGURE 11 shows a diametral section of a tyre with a bead lifting lever according to the invention in its starting position while inserting a rubber ring inside the tyre.

In the accompanying drawings attached the same or similar parts or components are designated with the same reference numerals.

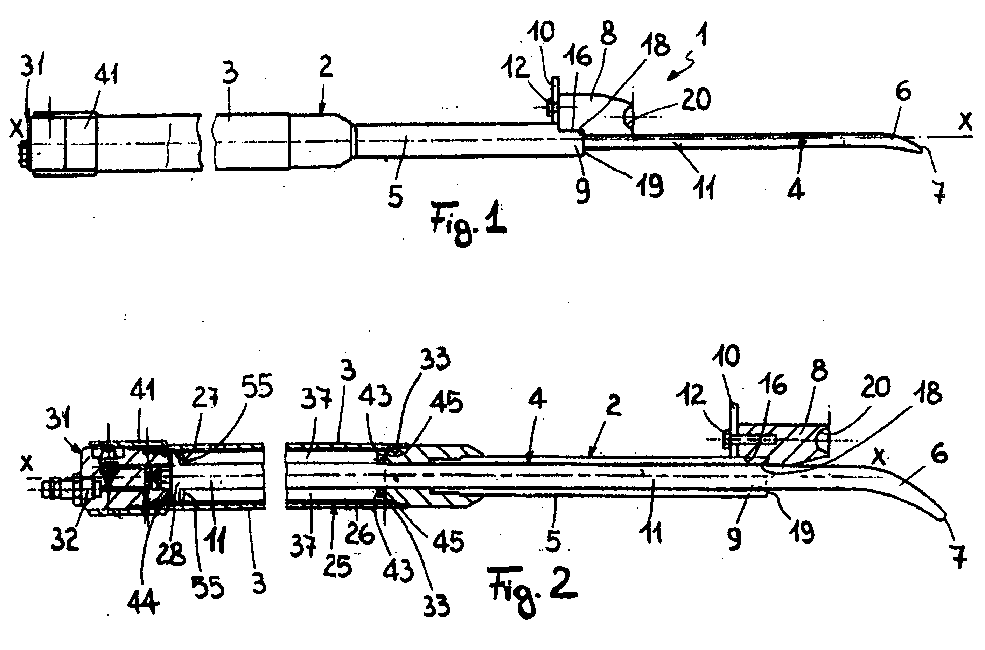

With reference first to Figures 1 to 5, a bead lifting lever according to the present invention, indicated with reference numeral 1, has an oblong body 2, preferably extending longitudinally along a main axis x-x and comprising an end acting as a helve 3, preferably extending to an intermediate portion 5 integral therewith and acting, in use, as a stiffening element, and a working end 4 telescopically connected to the helve 3, thereby at least partly retract into, and extend from the helve 3.

The working end 4 preferably consists of a rigid material, such as steel or a composite material strengthened with fibres, e.g. glass fibres, carbon fibres and the like, has a rod-like body or piston rod 11 with its free end 6 upturned with respect to axis x-x and provided with a transversal tip portion 7 having a rounded and thinning profile.

Advantageously, lever 1 is provided with an outer abutting element 8 secured to the free end 9 of the intermediate portion 5 and has a longitudinal bulkhead 10 extending perpendicular to axis x-x and fixed to the abutting element 8 e. g. by means of a screw 12.

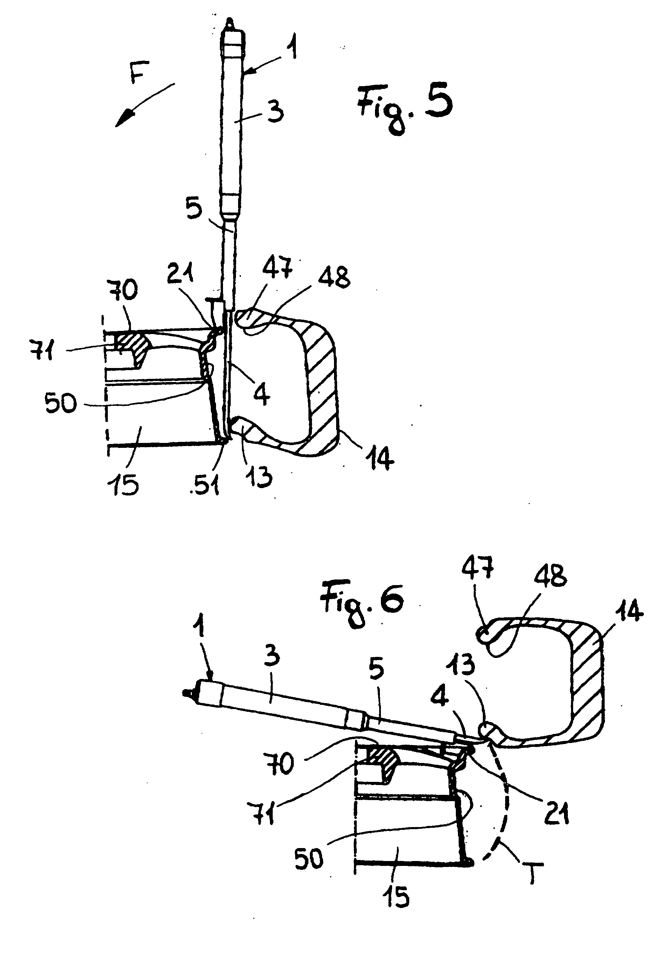

To counterbalance tensile stress applied, in use, by the bowed tip 6 of the working end 4 e.g. to a bead 13 of a tyre 14 (see Figure 5), the abutting element 8 preferably has a lower coupling surface 16, which delimits a shoulder 18 substantially perpendicular thereto and designed to abut against a front edge 19 of the free end 9 of the intermediate portion 5 so as to resist, in use, any tensile stress along axis x-x.

Control element 8 can also have a front side 20 facing towards the free end 6 of the working end 4 having an outer concave surface with a radius long enough to provide, in use, a large contact area, e.g. with an outer trim 21 of a rim 15, thus avoiding to damage its outer surface 23. For the same reason, front face 20 of the abutting element 8 can be made of or just coated with substantially soft material, e.g. rubber, in order to prevent external surface 23 of outer trim 21 from getting scratched or scared.

As shown in Figure 2, working end 4 has, at its end opposite to free bowed tip 6, a substantially piston-shaped portion 28 integral with the piston rod 11 and guided to move back and forth along main axis x-x inside a chamber or cylinder 25 delimited inside the helve 3 by an annular liner 26 coaxial with axis x-x, on which the lateral surface 27 of piston 28 is designed to slide airtight.

In order to make working end 4 interchangeable with respect to helve 3, free bowed tip 6 together with the piston rod 11 can be removably secured to piston 28 whereby lever 1 can be adapted in highly practical and simple manner to various working requirements.

Advantageously, annular liner 26 delimits with lateral inner surface 22 of helve 3 a ring-like air gap 29 extending longitudinally around the cylindrical chamber 25 and communicating therewith through an annular opening 33 delimited by the annular liner 26 at a longitudinal end of cylinder 25.

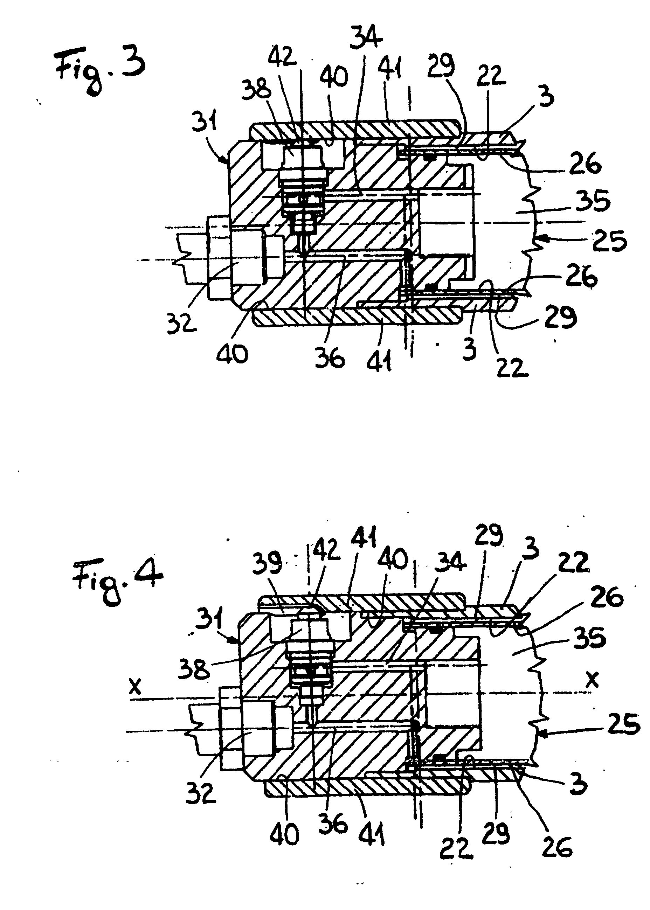

Preferably, piston 28 is moved, in use, by a pressurized fluid, e.g. compressed air, that is fed inside the cylinder 25 and the annular air gap 29 through a bottom member 31, shown in Figures 3 and 4 and located at the proximal end of lever 1. The bottom 31 is preferably formed with a connection seat 32 to a compressed air source (not shown in the drawings), from which a channel system extends which includes a first length 34 towards a proximal chamber 35 of cylinder 25 and a second length 36 communicating with a distal chamber 37 of cylinder 25 through annular air gap 29. The first length 34 can be controlled by a two-way valve 38 arranged to connect proximal chamber 35 to the compressed air source or to a relief 39 in order to cause piston 28 to move closer to, or further away from, bottom 31.

As specifically shown in Figure 4, compressed air can be ejected from proximal chamber 35 through relief slot 39 formed in an inner side wall 40 of bush knot 41 at the valve 38 so as to allow valve top 42 to lift and thus free a hole for releasing compressed air.

Bottom 31 is thus made in such a way that pressure in ring-like air space 29 and thus in distal chamber 37 is kept substantially constant and that pressure in proximal chamber 35 can be adjusted within a range from zero, when air has been completely ejected, to a value corresponding to the substantially constant pressure inside distal chamber 37. With distal chamber 37 and proximal chamber 35 at the same working pressure, piston 28 is moved further away from bottom 31, as pressure in proximal chamber 35 exerts a greater thrust onto piston 28 than that due to pressure inside distal chamber 37, front surface 44 facing towards proximal chamber 35 of piston 28 being larger than its surface 55 facing towards distal chamber 37 owing to the overall dimensions of piston rod 11.

As shown in Figures 2 and 4, a ring 43 coaxial with axis x-x can be provided inside distal 37 of cylinder 25, which acts as limit stop for piston 28 so as to keep piston 28 spaced away from bottom 45 of cylinder 25 whereby maintaining opening 33 connecting ring-like air space 29 to distal chamber 37 free from obstacles.

As shown in Figures 5 and 6, by means of a bead lifting lever 1 structured in the above described manner, when free tip 6 of the working end which is located in the position shown in Figure 2 with reference to the grip, is inserted between outer edge 21 of rim 15 and outer bead 47 of tyre 14, it is possible to obtain a good grip between tip 6 of bead lifting lever 1 and inner surface 48 of bead 47. When the abutting element 8 is resting against the edge 21 of rim 15 acting as fulcrum, the bead 47 can be lifted and removed from inner track 50 of rim 15 through a reduced angular movement of lever 1 towards rim 15 with little effort and, most of all, with no risk of damaging outer surface of edge 21 of rim 15 and inner surface of bead 47.

Similarly, once outer bead 47 is lifted, it is possible to insert working end 4, which is automatically drawn out from helve 3, between outer edge 21 of rim 15 and outer bead 47 in order to reach a spot not visible in the drawings, i.e. a zone between inner edge 13 of tyre 14 and inner edge 51 of rim 15. On the one hand, the curvature and the thinning of tip 6 make it easier to grip inner bead 13 and, on the other hand, automatic withdrawal, e.g. by causing working end 4 to slide telescopically into helve 3, allows inner bead 13 to be lifted up to outer edge 21 of rim 15 without irreversibly deforming the bead itself. In fact, once bead 13 has been engaged by the end 6, the operator acts on knot 41 of lever 1 until relief slot 39 is moved close to valve 38, thereby releasing compressed air from proximal chamber 35 of cylinder 25 and thus controlling withdrawal of working end 4 with respect to helve 3 and turning lever 1 towards rim 15 at the same time in the direction indicated by arrow F. Free tip 6 of working end 4 will thus follow, in use, a slightly curved trajectory T (Figure 6), which is concave with respect to inner track 50 of rim 15, till inner bead 13 is lifted even over outer edge 21 of rim 15, thus requiring minimum effort by the operator and above all without deforming tyre 14.

The above-mentioned bead lifting lever is subject to numerous modifications and variations within the scope defined by the claims.

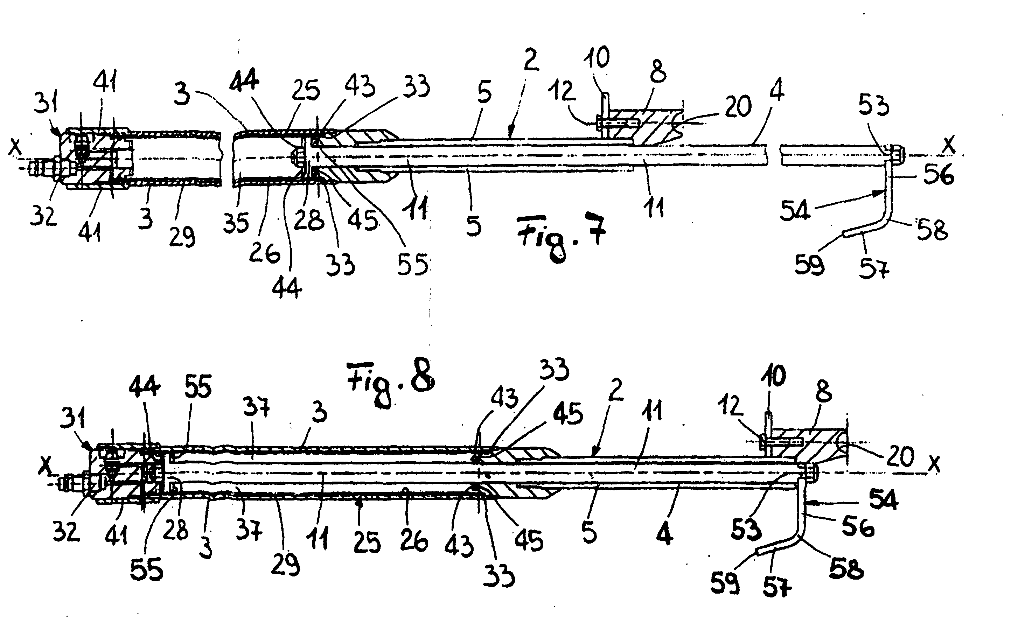

Thus, for example, instead of tapered and rounded tip 6, working end 4 can include, at the free end 53 of piston rod 11, a removable hook 54 - see Figures 7 and 8 - comprising two mutually angled lengths: a first length 56 connected to the piston rod 11 and extending substantially perpendicular to it and a second length 57 having one end 58 integral with the first length 56 and its other free end 59 pointing towards helve 3 and divergent with respect to main axis x-x.

A bead lifting lever 1 provided with a removable hook 54 can be used, e.g., for removing a rubber ring 60 of PAX-type by Michelin from, or mounting onto, a suitable tyre 14.

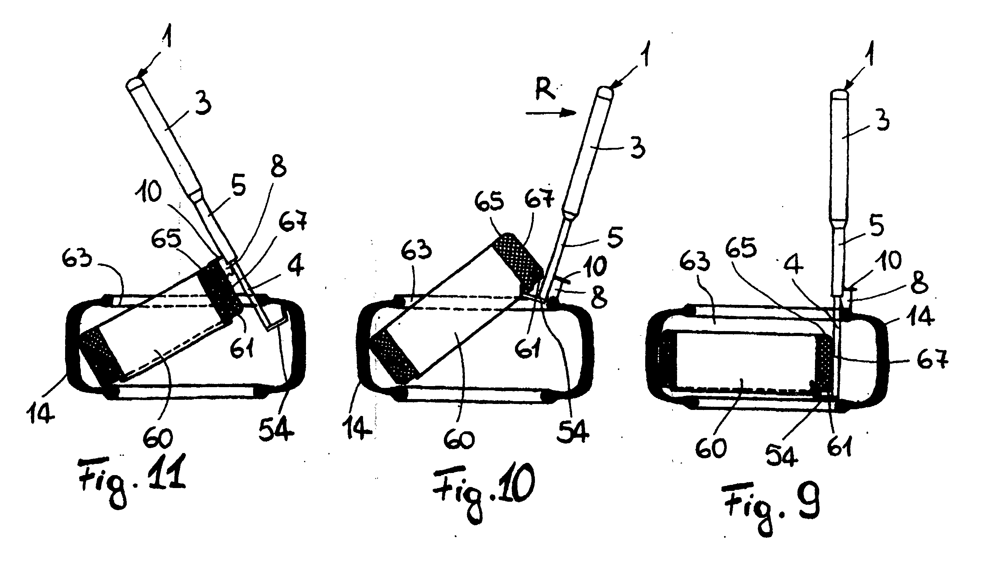

As shown in Figures 9 and 10, to remove ring 60 from tyre 14, bead lifting lever 1 is inserted, with its working end 4 completely drawn out from helve 3, substantially along the axial direction with reference to tyre 14, and hook 54 is engaged with inner front edge 61 of ring 60. Once the abutting element 8 abuts against the outer bead 47 of tyre 14, the bead lifting lever 1 is actuated, thus causing working end 4 to withdraw inside helve 3, thereby lifting the ring 60 till it comes out of upper opening 63 of tyre 14, also thanks to a slight turning movement of helve 3, as shown in Figure 10 by arrow R.

The operation of inserting ring 60 inside a tyre 14 (shown in Figure 11) includes instead abutting that part of bulkhead 10 that projects from the top of abutting element 8 and the back of the latter against outer front edge 65 of ring 60 and side edge 67, respectively, whereas the hook 54 engages with the inner surface of outer bead 47.

By actuating bead lifting lever 1 so as to cause initially drawn out working end 4 to withdraw into helve 3, ring 60 is accompanied through upper opening 63 of tyre 14 till it is completely inserted.

According to another embodiment, bead lifting lever 1 can have a working end provided with a double-bowed end portion in such a way as to avoid touching spoke area 71 when lever 1 is turned over close to front face 70 of rim 15 while tyre 14 is removed, especially if the spokes extend out of lying plane of outer edge 21 of rim 15, thereby preventing damaging both spoke area 71 and edge 21 of rim 15, since helve 3 is always held by the operator's hand.

Moreover, bead lifting lever 1 can be actuated by other kinds of control means, both automatically and manually actuated, e.g. a rack-tooth wheel group and the like.

## Claims

1. A bead lifting lever including an oblong body having a work end (4) and its other end acting as helve (3) constrained and slidably engageable one with respect to the other, whereby said lever (1) can be lengthened and shortened, control means comprising a fluid-operated piston (28) and cylinder (25) device having its cylinder (25) connectable to a pressurized fluid source wherein the said piston (28) delimits, inside the said cylinder (25), a distal chamber (37) designed to receive the said piston rod (11) and a proximal chamber (35), both chambers (35, 37) being variable in volume, and wherein said cylinder (25) comprises an outer ring-like liner (26) delimiting therewith an air gap (29) communicating, on one side, with the said pressurized fluid source and, through valve means (38), with the said proximal chamber (35) and, on the other, with the said distal chamber (37) **characterized in that** the said cylinder (25) comprises a bottom member (41) adjacent to the said proximal chamber (35) having at least a couple of ducts (34, 36) inside thereof, a first duct (34) communicating with the said proximal chamber (35) and a second duct (36) communicating with the said air gap (29) and **in that** the said ducts (34, 36) communicate with one another through said valve means (38) arranged to switch from a loading condition, in which said first duct (34) is in fluid communication with said pressurized fluid source, to a releasing condition, where said first duct (34) is cut off from said fluid source and from said second duct (36) and set said proximal chamber (35) is in fluid communication with a relief.

2. A lever as daimed in claim 1, **characterized in that** the said working end (4) has a substantially rod-like body having engaging means (7, 54) at its free end.

3. A lever as daimed in claim 2, **characterized in that** the said engaging means comprises an end portion (7) of the said working end (4) substantially curved with respect to the said rod-like body (11).

4. A lever as daimed in claim 3, **characterized in that** the said end portion (7) is tapered and rounded at the tip thereof.

## Patentansprüche

1. Wulstanhebehebel, der einen lang gestreckten Körper, der ein Arbeitsende (4) aufweist und dessen anderes Ende als Stiel (3) wirkt, wobei die zwei Enden zusammengehalten werden und relativ zueinander in einem Gleiteingriff sind, wodurch der Hebel (1) verlängert und verkürzt werden kann, und Steuermittel, die eine fluidbetätigte Vorrichtung mit Kolben (28) und Zylinder (25) enthalten, umfasst, wobei der Zylinder (25) mit einer Quelle für mit Druck beaufschlagtes Fluid verbunden werden kann und der Kolben (28) in dem Zylinder (25) eine distale Kammer (37), die so entworfen ist, dass sie die Kolbenstange (11) aufnimmt, und eine proximale Kammer (35) begrenzt, wobei beide Kammern (35, 37) ein variables Volumen haben, und wobei der Zylinder (25) eine äußere ringartige Verkleidung (26) aufweist, die einen Luftspalt (29) begrenzt, der einerseits mit der Quelle für mit Druck beaufschlagtes Fluid und über Ventilmittel (38) mit der proximalen Kammer (35) in Verbindung steht und andererseits mit der distalen Kammer (37) in Verbindung steht, **dadurch gekennzeichnet, dass** der Zylinder (25) ein Bodenelement (41), das an die proximale Kammer (35) angrenzt und in sich wenigstens ein Paar Rohrleitungen (34, 36) aufweist, wobei eine erste Rohrleitung (34) mit der proximalen Kammer (35) in Verbindung steht und eine zweite Rohrleitung (36) mit dem Lüftspalt (29) in Verbindung steht, und dass die Rohrleitungen (34, 35) miteinander über die Ventilmittel (38) in Verbindung stehen, die so beschaffen sind, dass sie von einem Lastzustand, in dem die erste Rohrleitung (34) mit der Quelle für mit Druck beaufschlagtes Fluid in einer Fluidverbindung steht, in einen Entlastungszustand umschaltet, in der die erste Rohrleitung (34) von der Fluidquelle und von der zweiten Rohrleitung (36) getrennt ist und die proximale Kammer (35) mit einem Entlastungsventil in einer Fluidverbindung steht.

2. Hebel nach Anspruch 1, **dadurch gekennzeichnet, dass** das Arbeitsende (4) einen im Wesentlichen stabförmigen Körper besitzt, der an seinem freien Ende Eingriffmittel (7, 54) besitzt.

3. Hebel nach Anspruch 2, **dadurch gekennzeichnet, dass** die Eingriffmittel einen Endabschnitt (7) des Arbeitsendes (4) umfassen, der in Bezug auf den stabförmigen Körper (11) im Wesentlichen gekrümmt ist.

4. Hebel nach Anspruch 3, **dadurch gekennzeichnet, dass** der Endabschnitt (7) konisch zuläuft und an seiner Spitze abgerundet ist.

## Revendications

1. Un levier de levage du talon comprenant un corps oblong pourvu d'une extrémité de travail (4) et d'une autre extrémité agissant comme un manche (3) bloquées et embrayables l'une dans l'autre, permettant audit levier (1) d'être allongé et raccourci, des moyens de contrôle comprenant un piston actionné par fluide (28) et un dispositif de cylindre (25) dont le cylindre (25) peut être raccordé à une source de fluide sous pression, dans lequel ledit piston (28) délimite, à l'intérieur dudit cylindre (25), une chambre distale (37) conçue pour recevoir ladite tige de piston (11) et une chambre proximale (35), les deux chambres (35, 37) ayant un volume variable, et dans lequel ledit cylindre (25) comprend une gaine externe annulaire (26) délimitant ainsi un espace d'air (29) communiquant, d'un côté, avec ladite source de fluide et, par des moyens de soupape (38), avec ladite chambre proximale (35) et, de l'autre, avec ladite chambre distale (37), **caractérisé en ce que** ledit cylindre (25) comprend un membre de fond (41) adjacent à ladite chambre proximale (35) ayant au moins deux conduits (34, 36) à l'intérieur de cette dernière, un premier conduit (34) communiquant avec ladite chambre proximale (35) et un second conduit (36) communiquant avec ledit espace d'air (29) et **en ce que** lesdits conduits (34, 36) communiquent l'un avec l'autre par lesdits moyens de soupape (38) disposés de manière à passer d'un état de charge, dans lequel ledit premier conduit (34) est en communication de fluide avec ladite source de fluide sous pression, à un état de relâche, dans lequel ledit premier conduit (34) est coupé de ladite source de fluide et dudit second conduit (36) et ladite chambre proximale (35) est en communication de fluide avec un détalonnage.

2. Un levier selon la revendication 1, **caractérisé en ce que** ladite extrémité de travail (4) est pourvue d'un corps sensiblement en forme de tige disposant de moyens d'embrayage (7, 54) sur son extrémité libre.

3. Un levier selon la revendication 2, **caractérisé en ce que** ledit moyen d'embrayage comprend une partie finale (7) de ladite extrémité de travail (4) sensiblement courbée par rapport audit corps en forme de tige (11).

4. Un levier selon la revendication 3, **caractérisé en ce que** ladite partie finale (7) est conique et arrondie à son bout.
